# EUROPEAN PATENT APPLICATION

(11) **EP 4 550 541 A1**
(43) Date of publication of application: **07.05.2025**
(21) Application number: 24170240.6
(22) Date of filing: 15.04.2024
(51) Int. Cl.: H01M 50/213, H01M 50/224, H01M 50/244, H01M 50/264, H01M 50/291, H01M 50/293

(54) **BATTERY PACK AND METHOD OF MANUFACTURING THE SAME**

(30) Priority: 02.11.2023 KR 20230150371
(71) Applicant: Samsung SDI Co., Ltd., Yongin-si, Gyeonggi-do 17084 (KR)
(72) Inventor: PARK, Myung Hyun, 16678 Suwon-si (KR)
(74) Representative: Marks & Clerk LLP

(57) **Abstract**

A battery pack and a method of manufacturing the same are disclosed, the battery pack includes a cell carrier holding an array of battery cells; a frame coupled to the cell carrier to reinforce rigidity of the cell carrier; a stud coupled to the cell carrier and passing through the frame; and a coupling portion coupling the frame to the stud.

## Description

### BACKGROUND

### 1. Field

The present invention relates to a battery pack and a method of manufacturing the same.

### 2. Description of the Related Art

In general, with rapidly increasing demand for portable electronics, such as laptops, video cameras, and mobile phones, and commercialization of robots and electric vehicles, research is being actively carried out to develop high-performance secondary batteries enabling repeated charging/discharging.

Battery packs applicable to medium to large electronic devices, such as notebook computers, camcorders, personal digital assistants (PDAs), and automotive batteries, include multiple unit cells due to the limited capacity of the unit cell.

Such a battery pack has a structure in which a large number of unit cells is electrically connected in series and/or parallel. In order to ensure sequential electrical connection of the unit cells, it is very important that the unit cells maintain a stable arrangement.

In particular, cylindrical rechargeable batteries used as unit cells in battery packs have difficulty in maintaining an arrangement thereof due to the shape thereof and thus require a separate securing device such as a cell carrier.

Vibration generated in the process of securing the cell carrier to a frame is transferred through a stud. Here, if a securing force of the stud is insufficient, this can cause damage to products.

The above information disclosed in this Background section is provided for enhancement of understanding of the background of the present disclosure, and, therefore, it may contain information that does not constitute related (or prior) art.

### SUMMARY

It is an aspect of the present invention to provide a battery pack in which a cell carrier and a stud are integrally formed with each other and thus can ensure enhanced coupling force between the cell carrier and a frame, and a method of manufacturing the same.

These and other aspects and features of the present disclosure will be described in or will be apparent from the following description of some embodiments of the present disclosure.

In accordance with one aspect of the present invention, a battery pack includes: a cell carrier holding an array of battery cells; a frame coupled to the cell carrier to reinforce rigidity of the cell carrier; a stud coupled to the cell carrier and passing through the frame; and a coupling portion coupling the frame to the stud.

The frame may include: a first frame covering an edge of the cell carrier and coupled to the stud; and a second frame covering the edge of the cell carrier and coupled to the first frame.

The first frame may include a pair of first frames facing each other, the second frame may include a pair of second frames facing each other, and the first frame and the second frame may partially overlap each other.

The first frame may include: a first frame body covering a first side surface of the cell carrier; a first frame extension extending from the first frame body and covering a second side surface of the cell carrier; and a first frame hole formed in the first frame body and allowing the stud to pass therethrough.

The second frame may include: a second frame body covering the second side surface of the cell carrier and coupled to the first frame extension; and a second frame extension extending from the second frame body and coupled to the first frame body.

The second frame may further include: a second frame hole formed at an end of the second frame extension and which prevents interference with the stud passing through the first frame hole.

The cell carrier and the stud may be integrally formed with each other.

The stud, which may include a metal material, may be integrally formed with the cell carrier, which may include a resin material, by insert injection molding.

The stud may include: a stud insert portion insert-molded into the cell carrier; a stud coupling portion extending from the stud insert portion, exposed outside the cell carrier, and coupled to the frame; and a stud penetrating portion extending from the stud coupling portion and passing through the frame.

The stud insert portion may include: an insert embedded portion embedded in the cell carrier; and an insert hole portion formed in the insert embedded portion.

The coupling portion may include: a first coupling portion for welding the first frame to the stud; and a second coupling portion for welding the first frame to the second frame.

The battery pack may further include: a cushioning material disposed between the cell carrier and the frame to absorb shock.

In accordance with another aspect of the present invention, a battery pack manufacturing method includes: an insert molding step in which a cell carrier and a stud are formed by insert molding; a first coupling step in which the stud is coupled to a first frame covering a first side surface of the cell carrier; and a second coupling step in which the first frame is coupled to a second frame covering a second side surface of the cell carrier.

The first coupling step may include: a first moving step in which the first frame is moved such that a stud penetrating portion of the stud passes through the first frame; a first close-contact step in which the first frame is brought into close contact with a stud coupling portion of the stud; and a first joining step in which the first frame is joined to the stud.

The second coupling step may include: a second close-contact step in which the second frame is brought into close contact with the first frame without interference with the stud; and a second joining step in which the first frame is joined to the second frame.

The battery pack manufacturing method may further include: a cushioning step in which a cushioning material for shock absorption is disposed between the cell carrier and the first frame.

In the battery pack and the battery pack manufacturing method according to embodiments of the present invention, a stud integrally formed with a cell carrier passes through a frame and is coupled to the frame, thereby suppressing vibration of the cell carrier.

In the battery pack and the battery pack manufacturing method according to embodiments of the present invention, a cushioning material is disposed between the cell carrier and the frame, thereby absorbing vibration and shock.

In the battery pack and the battery pack manufacturing method according to embodiments of the present invention, a stud is integrally formed with a cell carrier and is coupled to a frame, thereby preventing transfer of vibration through the stud.

A further aspect of the present invention provides a battery pack manufactured using a battery array having an improved structure and an automobile including the same.

However, the effects obtainable through the present disclosure are not limited to the above effects, and other technical effects that are not mentioned will be clearly understood by those skilled in the art from the following description of the present disclosure.

At least some of the above and other features of the invention are set out in the claims.

### Brief Description of Drawings

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic top view of a battery pack according to one embodiment of the present invention;
FIG. 2 is a schematic top view of a frame according to one embodiment of the present invention;
FIG. 3 is a schematic exploded perspective view of the frame according to the embodiment shown in FIG. 2;
FIG. 4 is a schematic perspective view of the frame according to the embodiment shown in FIG. 2;
FIG. 5 is a schematic view of part of a first frame according to one embodiment of the present invention;
FIG. 6 is a schematic view of part of a second frame according to one embodiment of the present invention;
FIG. 7 is a schematic view illustrating part of a cell carrier having a stud integrally formed therewith according to a first embodiment of the present invention;
FIG. 8 is a schematic view illustrating part of a cell carrier having a stud insert-molded thereinto according to a second embodiment of the present invention;
FIG. 9 is a schematic view of a stud according to the second embodiment;
FIG. 10 is a schematic view of a first coupling portion according to one embodiment of the present invention;
FIG. 11 is a schematic view of a second coupling portion according to one embodiment of the present invention;
FIG. 12 is a schematic view of a cushioning material according to one embodiment of the present invention;
FIG. 13 is a schematic flow diagram of a battery pack manufacturing method according to one embodiment of the present invention;
FIG. 14 is a schematic view illustrating a first coupling step according to one embodiment of the present invention;
FIG. 15 is a schematic view illustrating a second coupling step according to one embodiment of the present invention; and
FIG. 16 is a schematic flow diagram of a battery pack manufacturing method according to another embodiment of the present invention, wherein a cushioning step is added to the battery pack manufacturing method of FIG. 13.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should instead be interpreted as having a meaning consistent with the technical idea of the present disclosure and based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

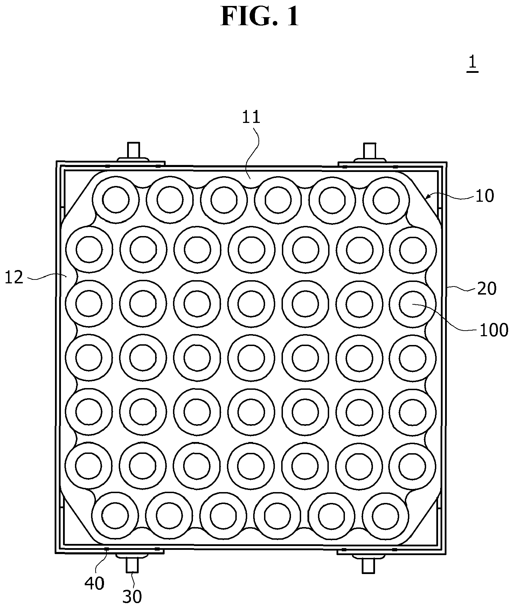

Referring to Fig. 1, the battery pack 1 according to this embodiment includes a cell carrier 10, a frame 20, a stud 30, and a coupling portion 40.

The cell carrier 10 may hold an array of battery cells 100. Each battery cell 100 may have a cylindrical shape. The array of battery cells 100 may be inserted into and coupled to the cell carrier 10. The cell carrier 10 may include an insulating material, preferably, a resin material.

The frame 20 may be coupled to the cell carrier 10 to reinforce rigidity of the cell carrier 10. The frame 20 may have a shape of a rectangular band. The frame 20 may be composed of a single piece or multiple pieces joined together. The frame 20 may be formed of a metal and may cover an outer surface of the cell carrier 10. The cell carrier 10 and the frame 20 may be coupled to each other by a separate securing means.

The stud 30 may be coupled to the cell carrier 10 and may pass through the frame 20. The stud 30 may be coupled to other components in a subsequent pack assembly process. The stud 30 may be formed of a metal.

The coupling portion 40 may couple the frame 20 to the stud 30. The coupling portion 40 may be a weld area for coupling between the frame 20 and the stud 30. However, it should be understood that the present invention is not limited thereto and the coupling portion 40 may employ various methods other than welding to couple the frame 20 to the stud 30.

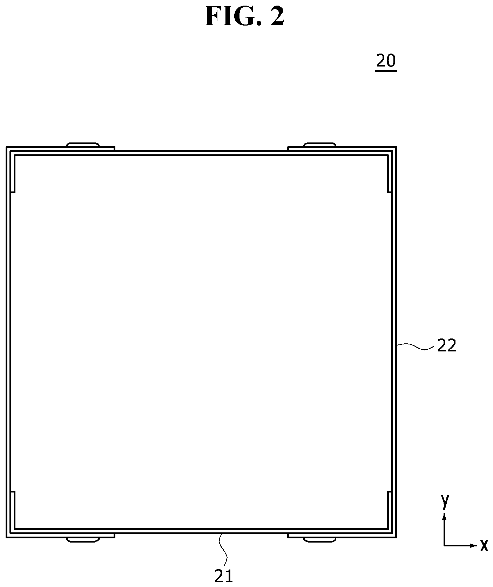

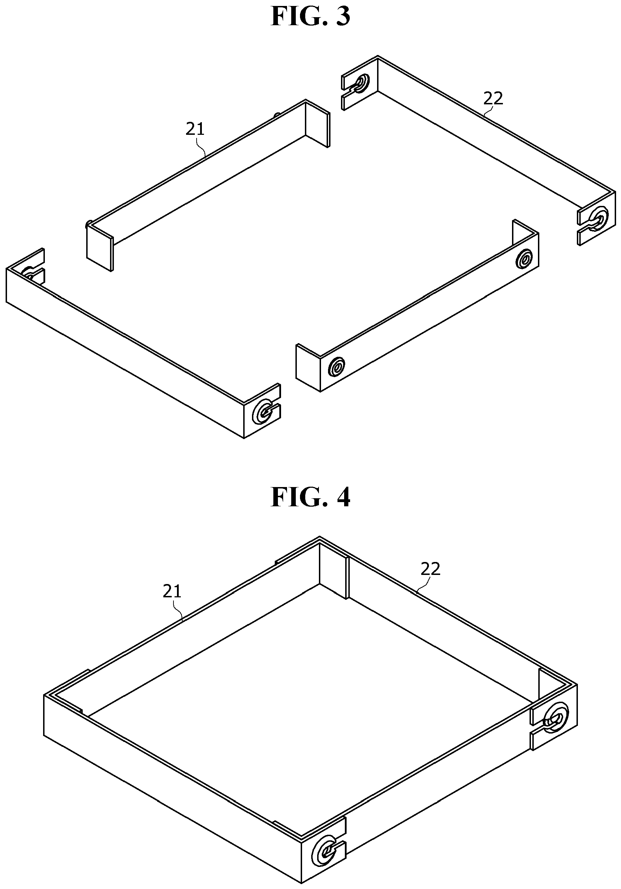

Referring to FIG. 2 to FIG. 4, the frame 20 according to this embodiment may include a first frame 21 and a second frame 22.

The first frame 21 may cover a first edge of the cell carrier 10 and may be coupled to the stud 30. The second frame 22 may cover a second edge of the cell carrier 10 and may be coupled to the first frame 21.

The first frame 21 includes a pair of first frames facing each other, the second frame 22 includes a pair of second frames facing each other, and the first frame 21 and the second frame 22 partially overlap each other. Overlapping portions of the first frame 21 and the second frame 22 may be coupled to each other by welding. The first frame 21 and the second frame 22 may be disposed alternately along a perimeter of the cell carrier 10. The second frame 22 may be brought into close contact with the cell carrier 10 after the first frame 21 is brought into close contact with the cell carrier 10. The first frame 21 may be moved in the y-axis direction of FIG.2 to allow the stud 30 to pass through the first frame 21. The second frame 22 may be moved in the x-axis direction of FIG. 2 to overlap the first frame 21.

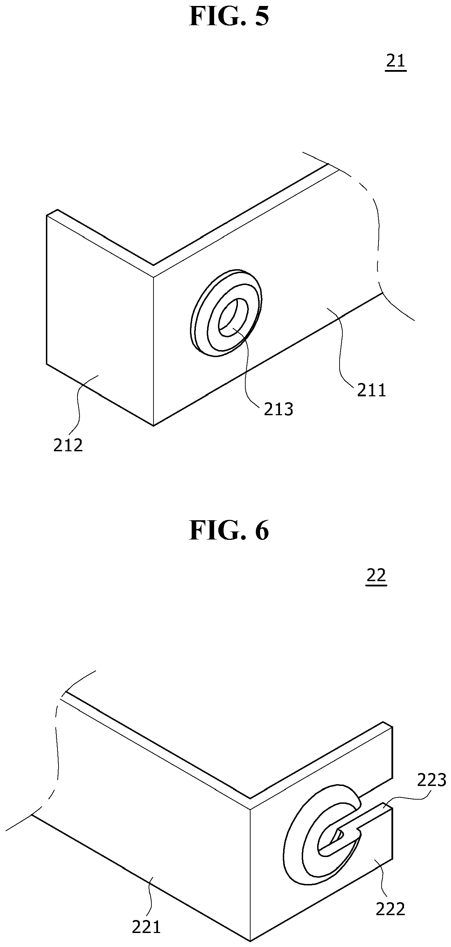

Referring to FIG. 5, the first frame 21 may include a first frame body 211, a first frame extension 212, and a first frame hole 213.

The first frame body 211 may cover a first side surface 11 (shown in FIG. 1) of the cell carrier 10. The first frame body 211 may correspond in length to the first side surface 11 and may face the first side surface 11. The first frame body 211 may be coupled to the cell carrier 10 by a separate securing means.

The first frame extension 212 may extend from the first frame body 211 and may cover a second side surface 12 (shown in FIG. 1) of the cell carrier 10. The first frame extension 212 may be bent at both ends of the first frame body 211 to face a portion of the second side surface 12.

The first frame hole 213 may be formed in the first frame body 211 to allow the stud 30 to pass therethrough. The first frame hole 213 may have a size corresponding to an outer diameter of the stud 30. When the first frame body 211 is moved in the y-axis direction, the first frame body 211 is brought into close contact with the first side surface 11 after the stud 30 passes through the first frame hole 213 in the first frame body 211.

Referring to FIG. 6, the second frame 22 may include a second frame body 221 and a second frame extension 222.

The second frame body 221 may cover the second side surface 12 of the cell carrier 10. The second frame body 221 may be coupled to the first frame extension 212. The second frame body 221 may correspond in length to the second side surface 12 and may face the second side surface 12. The second frame body 221 may be coupled to the cell carrier 10 by a separate securing means.

The second frame extension 222 may extend from the second frame body 221 and may be coupled to the first frame body 211. The second frame extension 222 may be bent at both ends of the second frame body 221 to face the first frame body 211.

The second frame 22 may further include a second frame hole 223. The second frame hole 223 may be formed in the second frame extension 222 to prevent interference with the stud 30. The second frame hole 223 may be formed at an end of the second frame extension 222 to have a predetermined length in the x-axis direction of FIG. 2. In this way, the stud 30 can be inserted into the second frame hole 223 when the second frame 22 is moved in the x-axis direction of FIG. 2 to be close to the second side surface 12.

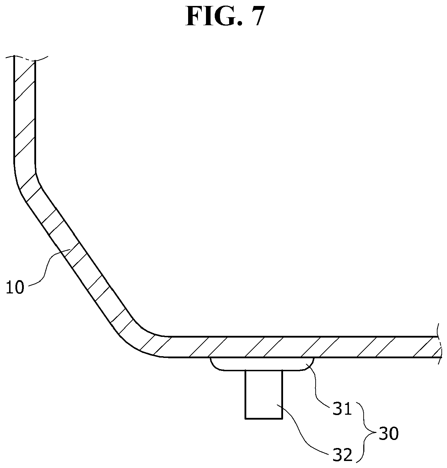

Referring to FIG. 7, the cell carrier 10 and the stud 30 may be integrally formed with each other. That is, the cell carrier 10 and the stud 30 may be integrally molded using the same material. Both the cell carrier 10 and the stud 30 may be formed of a metal. The stud 30 according to the first embodiment may include: a stud close-contact portion 31 protruding from the cell carrier 10 and closely contacting the frame 20; and a stud protrusion 32 extending from the stud contact portion 31 and passing through the frame 20.

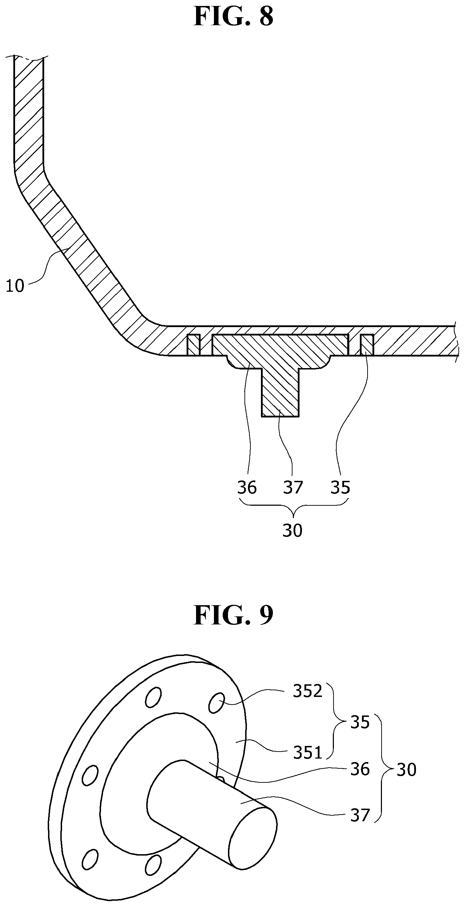

Referring to FIG. 8 and FIG. 9, the stud 30, which may include a metal material, may be integrally formed with the cell carrier 10, which may include a resin material, by insert injection molding. More specifically, the stud 30 may include a stud insert portion 35, a stud coupling portion 36, and a stud penetrating portion 37.

The stud insert portion 35 may be insert-molded into the cell carrier 10. The stud insert portion 35 may be placed in a mold for forming the cell carrier 10 and may be covered by the cell carrier 10 during injection molding of the cell carrier 10. The stud insert portion 35 may include an insert embedded portion 351 embedded in the cell carrier 10 and an insert hole portion 352 formed in the insert embedded portion 351 and allowing the resin material forming the cell carrier 10 to pass therethrough. The insert embedded portion 351 may have a shape of a polygonal plate or a disc, and the insert hole portion 352 may include a plurality of insert hole portions equidistantly formed along the insert embedded portion 351.

The stud coupling portion 36 may extend from the stud insert portion 35, may be exposed outside the cell carrier 10, and may be coupled to the frame 20. The stud coupling portion 36 may closely contact an inner surface of the first frame body 211. The stud coupling portion 36 may have a shape of a polygonal plate or a disc that is smaller in size than the stud insert portion 35. A portion of the first frame body 211 may be recessed inside and raised outside so as to cover the stud coupling portion 36.

The stud penetrating portion 37 may extend from the stud coupling portion 36 and may pass through the frame 20. The stud penetrating portion 37 may pass through the first frame hole 213 and may be inserted into the second frame hole 223. The stud penetrating portion 37 may be assembled with other components during pack assembly.

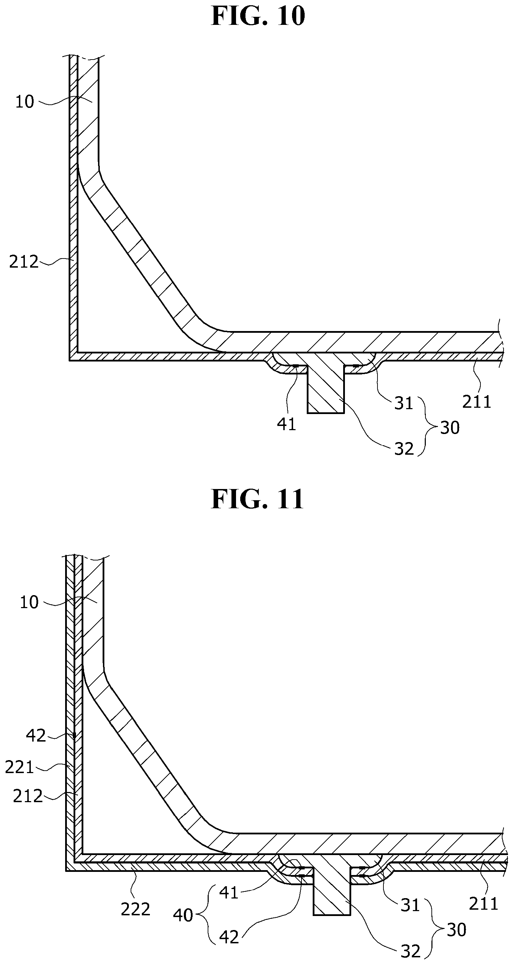

Referring to FIG. 10 and FIG. 11, the coupling portion 40 may include a first coupling portion 41 and a second coupling portion 42. The first coupling portion 41 and the second coupling portion 42 may be a base material for joining targets to each other.

The first coupling portion 41 may couple the first frame 21 to the stud 30 by welding. The stud protrusion 32 according to the first embodiment or the stud coupling portion 36 according to the second embodiment may be brought into surface-to-surface contact with the first frame body 211, and the first coupling portion 41 may couple the stud protrusion 32 or the stud coupling portion 36 to the first frame body 211.

The second coupling portion 42 may couple the first frame 21 to the second frame 22 by welding. After the first frame 21 is brought into close contact with the second frame 22, overlapping portions of the first frame 21 and the second frame 22 may be welded to each other. That is, the first frame body 211 and the second frame extension 222 may be coupled to each other by welding and the first frame extension 212 and the second frame body 221 may be coupled to each other by welding.

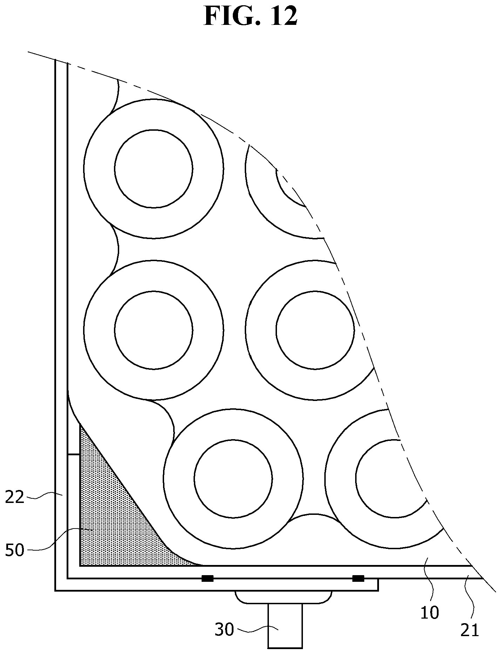

Referring to FIG. 12, the battery pack 1 according to one embodiment of the present invention may further include a cushioning material 50.

The cushioning material 50 may be disposed between the cell carrier 10 and the frame 20 to absorb shock. The cushioning material 50 may include an elastic damping material, such as rubber or sponge. The cushioning material 50 may be attached between the cell carrier 10 and the frame 20 by a bonding agent. A clearance space may be formed between each corner of the cell carrier 10 and the frame 20, and the cushioning material 50 may be inserted into the clearance space to absorb vibration or shock.

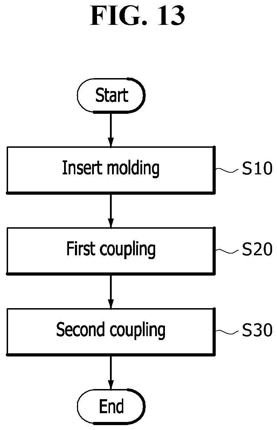

FIG. 13 is a schematic flow diagram of a battery pack manufacturing method according to one embodiment of the present invention.

In an insert molding step S10, a cell carrier 10 and a stud 30 are formed by insert molding. First, a portion of the stud 30 formed of a metal is introduced into a mold for forming the cell carrier 10. After the stud 30 is introduced into the mold, a molten resin is introduced into the mold. Then, the resin is cured to obtain the cell carrier 10 with the stud 30 partially inserted thereinto.

In a first coupling step S20, the stud 30 may be coupled to the first frame 21 covering the first side surface 11 of the cell carrier 10. A portion of the stud 30 protruding from the cell carrier 10 may be coupled to the first frame body 211 by the first coupling portion 41.

In a second coupling step S30, the first frame 21 may be coupled to the second frame 22 covering the second side surface 12 of the cell carrier 10. The first frame 21 and the second frame 22 may face each other and may be coupled to each other by the second coupling portion 42.

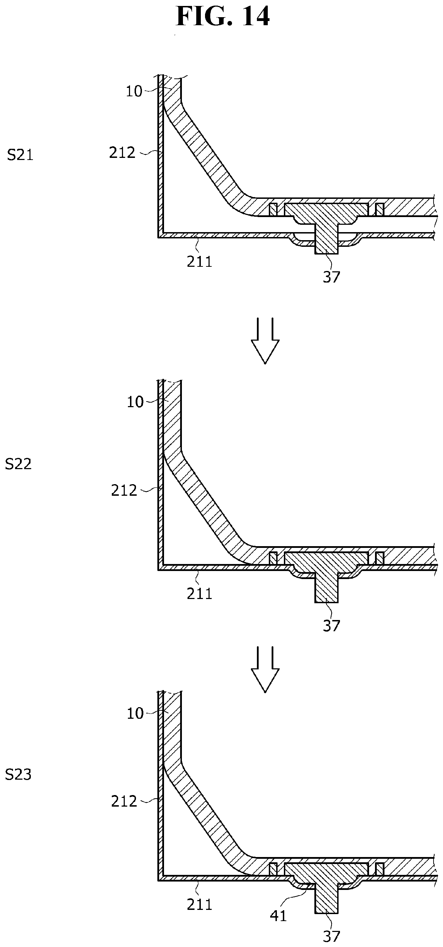

FIG. 14 is a schematic view illustrating the first coupling step according to one embodiment of the present invention. The first coupling step S20 may include a first moving step S21, a first close-contact step S22, and a first joining step S23.

In the first moving step S21, the first frame 21 is moved such that the stud penetrating portion 37 of the stud 30 passes through the first frame 21. Since the specific configuration of the stud 30 is shown in FIG. 9, detailed description thereof will be omitted. When the first frame 21 is gripped by a transfer device (not shown) such as a robot and is moved in the y-axis direction of FIG. 2, the stud 30 passes through the first frame hole 213 formed in the first frame body 211 while remaining stationary.

In the first close-contact step S22, the first frame 21 may be brought into close contact with the stud coupling portion 36 of the stud 30. Close contact between the stud coupling portion 36 and the first frame body 211 may be detected by a separate pressure sensor or position sensor (not shown). In the case of using the pressure sensor, movement of the transfer device may be stopped when the pressure sensor detects a load applied to the transfer device upon close contact between the stud coupling portion 36 and the first frame body 211. In the case of using the position sensor, movement of the transfer device may be stopped when positions of the stud coupling portion 36 and the first frame body 211 detected in real time by the position sensor match each other. When the first frame 21 is brought into close contact with the stud coupling portion 36, the first frame body 211 may cover the first side surface 11 and the first frame extension 212 may cover a portion of the second side surface 12.

In the first joining step S23, the first frame 21 and the stud 30 may be joined to each other. Specifically, abutting surfaces of the first frame body 211 and the stud coupling portion 36 may be joined to each other by laser spot welding. Here, a base material for welding may be disposed between the first frame body 211 and the stud coupling portion 36. However, it should be understood that the present invention is not limited thereto and the first frame body 211 and the stud coupling portion 36 may be joined to each other by various other joining methods.

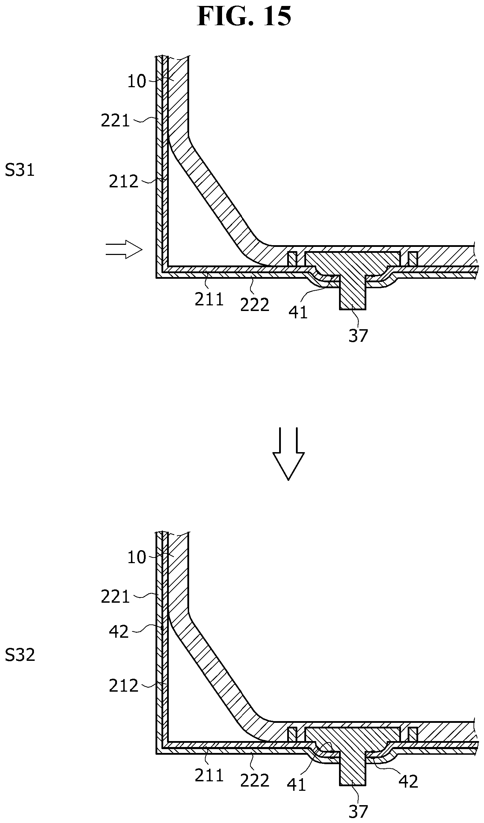

FIG. 15 is a schematic view illustrating the second coupling step S30 according to one embodiment of the present invention. The second coupling step S30 may include a second close-contact step S31 and a second joining step S32.

In the second close-contact step S31, the second frame 22 may be brought into close contact with the first frame 21. Here, there may be no interference between the second frame 22 and the stud 30 having passed through the first frame 21. The second frame body 221 may be moved in the x-axis direction of FIG. 2 to be brought into surface-to-surface contact with the first frame extension 212. As the stud penetrating portion 37 is inserted into the second frame hole 223 formed in the second frame extension 222, smooth movement of the second frame body 221 can be achieved. The second frame extension 222 may be brought into surface-to-surface contact with the first frame body 211.

In the second joining step S32, the first frame 21 and the second frame 22 may be joined to each other. Specifically, abutting surfaces of the first frame body 211 and the second frame extension 222 may be joined to each other by laser spot welding and abutting surfaces of the first frame extension 212 and the second frame body 221 may be joined to each other by laser spot welding. Here, a base material for welding may be disposed between the first frame body 211 and the second frame extension 222. The base material for welding may also be disposed between the first frame extension 212 and the second frame body 221. However, it should be understood that the present invention is not limited thereto and the first frame 21 and the second frame 22 may be joined to each other by various other joining methods.

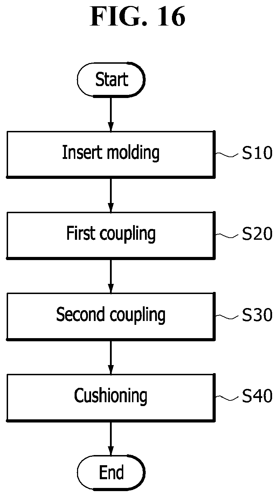

Referring to FIG. 16, the battery pack manufacturing method according to this embodiment may further include a cushioning step S40. In the cushioning step S40, the cushioning material 50 for shock absorption may be disposed between the cell carrier 10 and the first frame 21. A transfer device (not shown), such as a robot, may grip and move the cushioning material 50 to insert the cushioning material 50 into a space between each corner of the first frame 21 and the cell carrier 10. The cushioning step S40 may be performed after the first coupling step S20.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

Embodiments are set out in the following clauses:
Clause 1. A battery pack comprising: a cell carrier holding an array of battery cells; a frame coupled to the cell carrier to reinforce rigidity of the cell carrier; a stud coupled to the cell carrier and passing through the frame; and a coupling portion coupling the frame to the stud.
Clause 2. The battery pack according to Clause 1, wherein the frame comprises: a first frame covering an edge of the cell carrier and coupled to the stud; and a second frame covering the edge of the cell carrier and coupled to the first frame.
Clause 3. The battery pack according to Clause 2, wherein the first frame comprises a pair of first frames facing each other and the second frame comprises a pair of second frames facing each other, the first frame and the second frame partially overlapping each other.
Clause 4. The battery pack according to Clause 2, wherein the coupling portion comprises: a first coupling portion for welding the first frame to the stud; and a second coupling portion for welding the first frame to the second frame.
Clause 5. The battery pack according to Clause 2, wherein the first frame comprises: a first frame body covering a first side surface of the cell carrier; a first frame extension extending from the first frame body and covering a second side surface of the cell carrier; and a first frame hole formed in the first frame body and allowing the stud to pass therethrough.
Clause 6. The battery pack according to Clause 5, wherein the second frame comprises: a second frame body covering the second side surface of the cell carrier and coupled to first frame extension; and a second frame extension extending from the second frame body and coupled to the first frame body.
Clause 7. The battery pack according to Clause 1, wherein the cell carrier and the stud are integrally formed with each other.
Clause 8. The battery pack according to Clause 1, wherein the stud comprising a metal material is integrally formed with the cell carrier comprising a resin material by insert injection molding.
Clause 9. The battery pack according to Clause 1, wherein the stud comprises: a stud insert portion insert-molded into the cell carrier; a stud coupling portion extending from the stud insert portion, exposed outside the cell carrier, and coupled to the frame; and a stud penetrating portion extending from the stud coupling portion and passing through the frame.
Clause 10. The battery pack according to Clause 9, wherein the stud insert portion comprises: an insert embedded portion embedded in the cell carrier; and an insert hole portion formed in the insert embedded portion.
Clause 11. The battery pack according to Clause 1, further comprising: a cushioning material disposed between the cell carrier and the frame to absorb shock.
Clause 12. A battery pack manufacturing method comprising: an insert molding step in which a cell carrier and a stud are formed by insert molding; a first coupling step in which the stud is coupled to a first frame covering a first side surface of the cell carrier; and a second coupling step in which the first frame is coupled to a second frame covering a second side surface of the cell carrier.
Clause 13. The battery pack manufacturing method according to Clause 12, wherein the first coupling step comprises: a first moving step in which the first frame is moved such that a stud penetrating portion of the stud passes through the first frame; a first close-contact step in which the first frame is brought into close contact with a stud coupling portion of the stud; and a first joining step in which the first frame is joined to the stud.
Clause 14. The battery pack manufacturing method according to Clause 12, wherein the second coupling step comprises: a second close-contact step in which the second frame is brought into close contact with the first frame without interference with the stud; and a second joining step in which the first frame is joined to the second frame.
Clause 15. The battery pack manufacturing method according to Clause 12, further comprising: a cushioning step in which a cushioning material for shock absorption is disposed between the cell carrier and the first frame.

## Claims

1. A battery pack comprising:
a cell carrier holding an array of battery cells;
a frame coupled to the cell carrier;
a stud coupled to the cell carrier and passing through the frame; and
a coupling portion coupling the frame to the stud.

2. The battery pack according to claim 1, wherein the frame comprises:
a first frame covering a first edge of the cell carrier and coupled to the stud; and
a second frame covering a second edge of the cell carrier and coupled to the first frame.

3. The battery pack according to claim 2, wherein:
the first frame comprises a pair of first frames covering a first pair of opposite edges of the cell carrier; and
the second frame comprises a pair of second frames covering a second pair of opposite edges of the cell carrier, and
the first frame and the second frame partially overlap each other.

4. The battery pack according to claim 2 or 3, wherein the coupling portion comprises:
a first coupling portion for coupling the first frame to the stud; and
a second coupling portion for coupling the first frame to the second frame.

5. The battery pack according to claim 2, 3 or 4, wherein the first frame comprises:
a first frame body covering a first side surface of the cell carrier;
a first frame extension extending from the first frame body and covering a second side surface of the cell carrier; and
a first frame hole in the first frame body and which is configured to allow the stud to pass therethrough,
wherein optionally the second frame comprises:
a second frame body covering the second side surface of the cell carrier and coupled to the first frame extension; and
a second frame extension extending from the second frame body and coupled to the first frame body,
and wherein optionally the second frame further includes a second frame hole at an end of the second frame extension,
and further optionally the second frame further includes a second frame hole at an end of the second frame extension.

6. The battery pack according to any preceding claim, wherein the cell carrier and the stud are integral with each other.

7. The battery pack according to any preceding claim, wherein the stud comprises a metal material and cell carrier comprises a resin material.

8. The battery pack according to any preceding claim, wherein the stud comprises:
a stud contact portion; and
a protrusion portion

9. The battery pack according to any one of claims 1 to 7, wherein the stud comprises:
a stud insert portion insert-molded into the cell carrier;
a stud coupling portion extending from the stud insert portion, exposed outside the cell carrier, and coupled to the frame; and
a stud penetrating portion extending from the stud coupling portion and passing through the frame.

10. The battery pack according to claim 9, wherein the stud insert portion comprises:
an insert embedded portion embedded in the cell carrier; and
an insert hole portion in the insert embedded portion.

11. The battery pack according to any preceding claim, further comprising:
a cushioning material disposed between the cell carrier and the frame.

12. A battery pack manufacturing method comprising:
an insert molding step in which a cell carrier and a stud are formed by insert molding;
a first coupling step in which the stud is coupled to a first frame covering a first side surface of the cell carrier; and
a second coupling step in which the first frame is coupled to a second frame covering a second side surface of the cell carrier.

13. The battery pack manufacturing method according to claim 12, wherein the first coupling step comprises:
a first moving step in which the first frame is moved such that a stud penetrating portion of the stud passes through the first frame;
a first close-contact step in which the first frame is brought into close contact with a stud coupling portion of the stud; and
a first joining step in which the first frame is joined to the stud.

14. The battery pack manufacturing method according to claim 12 or 13, wherein the second coupling step comprises:
a second close-contact step in which the second frame is brought into close contact with the first frame without interference with the stud; and
a second joining step in which the first frame is joined to the second frame.

15. The battery pack manufacturing method according to claim 12, 13 or 14, further comprising:
a cushioning step in which a cushioning material is disposed between the cell carrier and the first frame.
